# EUROPÄISCHE PATENTSCHRIFT

(11) **EP 2 522 864 B1**
(45) Veröffentlichungstag und Bekanntmachung des Hinweises auf die Patenterteilung: **20.07.2016**
(21) Anmeldenummer: 12003237.0
(22) Anmeldetag: 03.05.2012
(51) Int. Cl.: F16B 25/00, F16B 25/10

(54) **Holz- oder Kunststoffschraube**
Wood or plastic screw
Vis à matière plastique ou à bois

(30) Priorität: 12.05.2011 DE 202011100601 U
(43) Veröffentlichungstag der Anmeldung: 14.11.2012
(73) Patentinhaber: Berner Trading Holding GmbH, 74653 Künzelsau (DE)
(72) Erfinder: Runge, Erich, 74653 Künzelsau (DE)
(74) Vertreter: Prinz & Partner mbB

(56) Entgegenhaltungen:
- EP-A1- 1 939 466
- CH-A5- 689 214
- DE-A1- 2 732 695
- DE-A1-102004 029 305
- DE-A1-102008 048 703
- DE-A1-102008 057 678
- GB-A- 251 409
- JP-A- H05 196 021
- US-A- 4 874 278
- US-A1- 2006 140 738
- US-A1- 2006 140 740
- US-A1- 2007 204 552
- US-A1- 2008 025 816

## Beschreibung

Die Erfindung betrifft eine Holz- oder Kunststoffschraube mit einem Kopf, einer Spitze und einem zylindrischen Schaft mit wenigstens einem Gewinde mit einem ersten und einem zweiten Gewindegang (20, 22)sowie einem kegeligen Spitzenabschnitt, der den Übergang vom Schaft zur Spitze bildet und wobei sich der erste Gewindegang bis zur Spitze erstreckt und der zweite Gewindegang vor der Spitze endet.

Aus der EP 0 939 235 B1 und aus der EP 1 925 828 B1 sind Holz- und Kunststoffschrauben bekannt, die im kegeligen Spitzenabschnitt oder bereits vor dem Spitzenabschnitt beginnend sogenannte Schabrippen aufweisen, die das Eindrehen des selbstschneidenden Gewindes in das Werkstück erleichtern sollen. Diese Schabrippen erstrecken sich nicht bis zur Spitze. Die EP 1 925 828 B1 schlägt vor, die Schabrippe als Gewinde auszuführen, dessen Steigung kleiner oder gleich der des Schraubgewindes ist.

Die EP 0 939 235 B1 wiederum schlägt vor, die Rippe steiler als das Schraubgewinde zu stellen und sie gegenüber dem Kerndurchmesser des Schaftes etwas vorstehen zu lassen.

Einen weiteren Stand der Technik bildet die JP 05-196021 A.

Aufgabe der vorigen Erfindung ist es, eine Holz- oder Kunststoffschraube zu schaffen, die sich durch ein sehr gutes Eindrehverhalten in das Werkstück auszeichnet.

Diese Aufgabe wird bei der erfindungsgemäßen Holz- und Kunststoffschraube der eingangs genannten Art durch die Merkmale von Anspruch 1 gelöst, unter anderem dadurch, dass der zweite Gewindegang im Spitzenabschnitt einen abgewinkelten Endabschnitt hat, der eine größere Steigung als der an ihn angrenzende Abschnitt des zweiten Gewindegangs besitzt und den zweiten Gewindegang schneidet. Der Endabschnitt bildet das tatsächliche Ende des zweiten Gewindegangs. In diesem Bereich ist der zweite Gewindegang nicht mehr mit der ursprünglichen Steigung, die auch der Steigung des ersten Gewindegangs entspricht, versehen, sondern dazu abgewinkelt. Dieser abgewinkelte Abschnitt, im folgenden Endabschnitt genannt, bildet dann eine Schabeinrichtung. Die Holz- oder Kunststoffschraube nach der Erfindung ist selbstschneidend.

Die erfindungsgemäße Holz- oder Kunststoffschraube kann im Schaftabschnitt, außerhalb des Spitzenabschnitts, vorzugsweise entfernt vom Spitzenabschnitt und, falls vorhanden, auch vom abgewinkelten Endbereich im zweiten Gewindegang einen Schabeabschnitt aufweist, der durch einen Bereich mit größerer Steigung gegenüber seinem angrenzenden Bereich ausgebildet ist. Bei dieser Variante wird ebenfalls nur im zweiten Gewindegang eine Besonderheit ausgeführt, nämlich ein Schabeabschnitt im Schaftbereich, was für ein leichteres Eindrehen sorgen soll, wobei der zweite Gewindeabschnitt vom Schabeabschnitt zum Kopf und zur Spitze hin in Abschnitte des zweiten Gewindegangs übergeht, die parallel zum ersten Gewindegang verlaufen, der eine gleichmäßige Steigung aufweist.

Gemäß der bevorzugten Ausführungsform sind beide Varianten, nämlich der abgewinkelte Endabschnitt und der Schabeabschnitt im Schaft gemeinsam vorgesehen. Dies hat den Vorteil, dass der erste, bis zur Spitze reichende Gewindegang komplett ohne Besonderheit ausgeführt werden kann, also gleichmäßig verläuft, wogegen die Besonderheiten ausschließlich im zweiten Gewindegang ausgeführt werden. Nur dieser hat dann die Unregelmäßigkeiten, die für Vorteile beim Eindrehen sorgen.

Der Endabschnitt und/oder der Schabeabschnitt kann geradlinig und axial zur Spitze verlaufen oder sogar in Gegenrichtung zum angrenzenden Abschnitt des zweiten Gewindegangs und damit in Gegenrichtung zum ersten Gewindegang verlaufen.

Der Endabschnitt und/oder der Schabeabschnitt kann auch den ersten Gewindegang schneiden, sodass sich sogar bevorzugt eine Kreuzung der Gewindegänge bildet.

Der Endabschnitt kann frei enden oder aber an einem Schnittpunkt mit dem ersten Gewindegang.

Die Höhe des zweiten Gewindegangs wird unmittelbar vor dem Endabschnitt reduziert, was dahingehend sinnvoll ist, als dass der Endabschnitt nicht gegenüber dem Kerndurchmesser des Schafts vorstehen soll.

Wie durch Versuche herausgefunden wurde, sollte der zweite Endabschnitt wenigstens 1,5 mm vor der Spitze enden, um ein Andrehen und Halten der Schraube im Untergrund zu ermöglichen.

Der zweite Gewindegang sollte im Bereich seines Schabeabschnitts den ersten Gewindegang einmal schneiden.

Weitere Merkmale und Vorteile der Erfindung ergeben sich aus der nachfolgenden Beschreibung aus den nachfolgenden Zeichnungen, auf die Bezug genommen wird. In den Zeichnungen zeigen:
Figur 1 eine Seitenansicht einer ersten Ausführungsform der erfindungsgemäßen Holz- oder Kunststoffschraube,
Figur 2 eine vergrößerte Ansicht im Bereich der Schraubenspitze,
Figur 3 eine Schnittansicht nach der Linie III-III im Bereich der Schraubenspitze,
Figur 4 eine Ansicht der Spitze gemäß einer zweiten Ausführungsform der erfindungsgemäßen Holz- und Kunststoffschraube,
Figuren 5 und 6 weitere Ausführungsformen einer erfindungsgemäßen Holz- und Kunststoffschraube, ebenfalls nur durch die Spitze dargestellt.

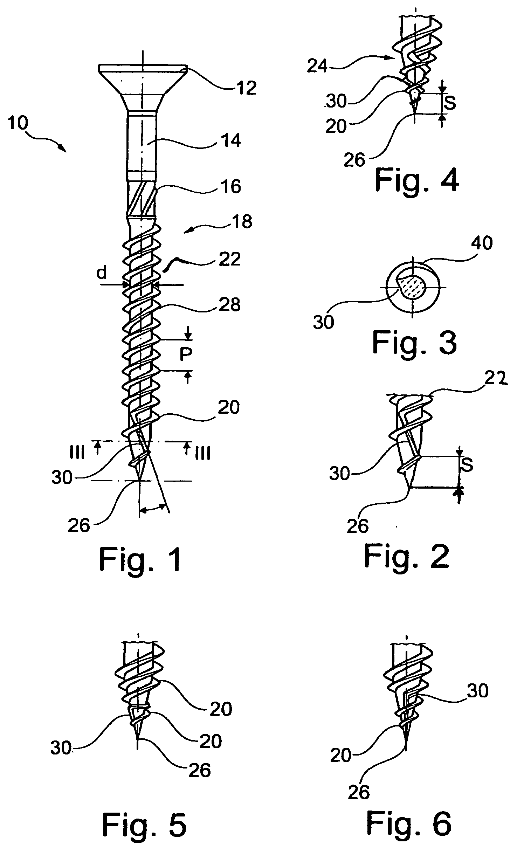

In Figur 1 ist eine Holz- oder Kunststoffschraube 10 dargestellt, die einen Schraubenkopf 12 und einen sich daran anschließenden Schaft 14 aufweist, der zuerst einen Schabebereich 16 und daran angrenzend einen Gewindeabschnitt 18 besitzt. Der Gewindeabschnitt 18 umfasst einen ersten Gewindegang 20 sowie einen parallelen zweiten Gewindegang 22. Der Schaft 14 endet in einem kegeligen Spitzenabschnitt 24, der wiederum in einer Spitze 26 ausläuft.

Der erste Gewindegang 20 hat eine Steigung P und läuft bis zur Spitze 26. Der erste Gewindegang 20 verläuft völlig gleichmäßig, die Steigung ändert sich nicht.

Im Gegensatz hierzu hat der zweite Gewindegang 22 jedoch einige besondere Abschnitte, in denen seine ansonsten ebenfalls gleichmäßige Steigung P nicht aufrecht erhalten wird.

Der zweite Gewindegang 22 endet bereits vor der Spitze 26 in einem Abstand S (siehe Figur 2) vorzugsweise im Bereich von 1,5 bis 4 mm vor der Spitze 26. Darüber hinaus hat der zweite Gewindegang 22 im Gewindeabschnitt 18 einen kurzen Zwischenabschnitt, über welchen der zweite Gewindegang über 1 bis 2 Gänge eine höhere Steigung hat. Figur 1 zeigt einen Gang des zweiten Gewindegangs 22, bei dem die Steigung erhöht ist. In diesem Bereich, Schabeabschnitt 26 genannt, dient der zweite Gewindegang als Schabkante. Die Höhe des Gewindes in diesem Bereich ist vorzugsweise gegenüber dem übrigen Bereich der Gewinde verringert. Der Schabeabschnitt 28 kann in Wendelrichtung geneigt sein, in Gegenrichtung verlaufen (wie der gezeigte, später noch erwähnte Endabschnitt 30) oder, wie in Figur 1 gezeigt, geradlinig axial in Richtung Spitze 26 verlaufen.

Zu betonen ist, dass dieser Schabeabschnitt 28 zum Kopf und zur Spitze hin in Abschnitte des zweiten Gewindegangs 22 übergeht, die die Steigung P aufweisen.

Bevorzugt ist die Steigung in diesem Schabeabschnitt 28 so ausgeführt, dass der zweite Gewindegang 22 den ersten Gewindegang 20 schneidet.

Die zweite Besonderheit des zweiten Gewindegangs 22 besteht darin, dass sein spitzenseitiges Ende einen gegenüber dem angrenzenden, die Steigung P aufweisenden Abschnitt abgewinkelt ist. Dieser abgewinkelte Bereich wird als abgewinkelter Endabschnitt 30 bezeichnet und ist in den Figuren 1 und 2 gut zu erkennen.

Der abgewinkelte Endabschnitt 30 liegt nur im kegeligen Spitzenabschnitt 24 und dient ebenfalls einem Schneid-, Schab- oder Fräsvorgang beim Einschneiden der Schraube in den Untergrund.

Der Endabschnitt 30 ist in der Ausführungsform auf den Figuren 1 und 2 sogar in Gegenrichtung zum angrenzenden zweiten Gewindegang und damit in Gegenrichtung zum ersten Gewindegang 20 abgewinkelt. Ferner hat er eine größere Steigung als die Steigung P, das heißt als die normale Steigung der beiden Gewindegänge 20, 22.

Durch die Umkehrung der Wendelrichtung schneidet der Endabschnitt 30 den ersten Gewindegang 20 im Spitzenabschnitt 24 ein- oder sogar mehrfach. In Figur 2 ist solches Kreuzen der Gewindegänge 20, 22 zu sehen.

Vorteilhaft ist es, wenn der Endabschnitt 30 am Schnittpunkt zum ersten Gewindegang 20 endet, somit also nicht frei endet, sondern mit dem ersten Gewindegang 20. Auch dies ist in Figur 2 dargestellt.

Wichtig ist, dass der Endabschnitt 30 nicht über den Kerndurchmesser hinaus radial vorsteht. In Figur 3 ist die Verringerung der Höhe des zweiten Gewindegangs im Bereich des Endabschnitts 30 und zuvor am Übergang zum Schaft 14 durch eine Art schneckenförmige Linie 40 dargestellt. In Figur 3 ist der erste Gewindegang 20 zur Steigerung der Übersichtlichkeit weggelassen worden.

Während bei der Ausführungsform nach den Figuren 1 bis 3 der Endabschnitt 30 sich nicht vollständig um 180°, sondern nur um weniger als 180° erstreckt, ist bei der Ausführungsform nach Figur 4 der Endabschnitt 30 zwar auch in Gegenrichtung abgeknickt, jedoch läuft er um mehr als 360°. Auch er endet in einem Abstand S deutlich vor der Spitze 26 und schneidet den ersten Gewindegang 20 mehrfach.

Bei den Ausführungsformen nach Figuren 5 und 6, bei denen wie bei den übrigen Ausführungsformen der Endabschnitt 30 nicht über den Kerndurchmesser d des Schafts 14 nach außen vorsteht, verläuft der Endabschnitt 30 geradlinig axial zur Spitze 26, ohne diese zu erreichen.

Während bei der Ausführungsform nach Figur 5 der Endabschnitt 30 den ersten Gewindegang 20 nicht kreuzt, sondern mit seinem freien Ende an ihm endet, ist eine solche Kreuzung der Gewindegänge im Bereich des Endabschnitts 30 bei Figur 6 vorgesehen.

Der Schabeabschnitt 28 kann an jeder axialen und Umfangsposition am Schaft 14 vorgesehen sein. Er kann auch unmittelbar nach dem Spitzenabschnitt 24 beginnen, jedoch sollte er hier nicht direkt in den Endabschnitt 30 übergehen.

## Patentansprüche

1. Holz- oder Kunststoffschraube, mit einem Kopf (12), einer Spitze (26), einem zylindrischen Schaft (14) mit wenigstens einem zweigängigen Gewinde, das ein ersten und einen zweiten Gewindegang (20, 22) aufweist, sowie einem kegeligen Spitzenabschnitt (24), der den Übergang vom Schaft (14) zur Spitze (26) bildet, wobei sich der erste Gewindegang (20) bis zur Spitze (26) erstreckt, **dadurch gekennzeichnet, dass** der zweite Gewindegang (22) vor der Spitze (26) endet, der zweite Gewindegang (22) im Spitzenabschnitt (24) einen abgewinkelten Endabschnitt (30) hat, der geradlinig axial verläuft oder eine größere Steigung besitzt als der an ihn angrenzende Abschnitt des zweiten Gewindegangs (22) und den ersten Gewindegang (22) schneidet.

2. Holz- oder Kunststoffschraube nach Anspruch 1,**dadurch gekennzeichnet, dass** der zweite Gewindegang (22) im Bereich des Schafts (14) und außerhalb des Spitzenabschnitts (24) einen Schabeabschnitt (28) durch einen Bereich mit größerer Steigung gegenüber seinen angrenzenden Bereichen bildet, wobei der Schabeabschnitt (28) zum Kopf und zur Spitze hin in Abschnitte des zweiten Gewindegangs (22) übergeht, die parallel zum ersten Gewindegang (20) verlaufen, der eine gleichmäßige Steigung aufweist.

3. Holz- oder Kunststoffschraube nach Anspruch 1 oder 2, **dadurch gekennzeichnet, dass** der Endabschnitt (30) und/oder der Schabeabschnitt (28) geradlinig und axial zur Spitze (26) verläuft.

4. Holz- oder Kunststoffschraube nach einem der Ansprüche 1 bis 3 **dadurch gekennzeichnet, dass** der Endabschnitt (30) und/oder der Schabeabschnitt (28) in Gegenrichtung zum angrenzenden Abschnitt des zweiten Gewindegangs (22) verläuft.

5. Holz- oder Kunststoffschraube nach einem der vorhergehenden Ansprüche, soweit auf Anspruch 2 rückbezogen, **dadurch gekennzeichnet, dass** der Schabeabschnitt (28) den ersten Gewindegang (20) schneidet und vorzugsweise eine Kreuzung der Gewindegänge (20, 22) bildet.

6. Holz- oder Kunststoffschraube nach einem der vorhergehenden Ansprüche, **dadurch gekennzeichnet, dass** der Endabschnitt (30) an einem Schnittpunkt mit dem ersten Gewindegang (20) endet.

7. Holz- oder Kunststoffschraube nach einem der vorhergehenden Ansprüche, **dadurch gekennzeichnet, dass** die Höhe des zweiten Gewindegangs (22) unmittelbar vor dem Endabschnitt (30) reduziert ist.

8. Holz- oder Kunststoffschraube nach einem der vorhergehenden Ansprüche, **dadurch gekennzeichnet, dass** der Endabschnitt (30) wenigstens 1,5 mm vor der Spitze (26) endet.

9. Holz- oder Kunststoffschraube nach einem der vorhergehenden Ansprüche, **dadurch gekennzeichnet, dass** der zweite Gewindegang (22) im Schabeabschnitt (28) den ersten Gewindegang (20) nicht schneidet.

10. Holz- oder Kunststoffschraube nach einem der Ansprüche 1-8, **dadurch gekennzeichnet, dass** der zweite Gewindegang (22) im Schabeabschnitt (28) den ersten Gewindegang genau einmal schneidet.

11. Holz- oder Kunststoffschraube nach einem der vorhergehenden Ansprüche, **dadurch gekennzeichnet, dass** der zweite Gewindegang (22) im Schabeabschnitt (28) eine reduzierte Gewindehöhe hat.

## Claims

1. A wood or plastic screw, comprising a head (12), a tip (26), a cylindrical shank (14) having at least one double-start thread which has first and second thread turns (20, 22), and a conical tip portion (24) which forms the transition from the shank (14) to the tip (26), the first thread turn (20) extending as far as to the tip (26), **characterized in that** the second thread turn (22) ends before the tip (26), the second thread turn (22) has an angled end portion (30) in the tip portion (24), the end portion (30) running axially in a straight line or having a larger pitch than the portion adjacent to it of the second thread turn (22) and intersecting the first thread turn (20).

2. The wood or plastic screw according to claim 1, **characterized in that** in the region of the shank (14) and outside the tip portion (24), the second thread turn (22) forms a shaving portion (28) by an area with a larger pitch compared with its adjoining areas, the shaving portion (28) transitioning, towards the head and the tip, into portions of the second thread turn (22) which run parallel to the first thread turn (20) having a constant pitch.

3. The wood or plastic screw according to claim 1 or 2, **characterized in that** the end portion (30) and/or the shaving portion (28) run(s) in a straight line and axially to the tip (26).

4. The wood or plastic screw according to any of claims 1 to 3, **characterized in that** the end portion (30) and/or the shaving portion (28) run(s) in the opposite direction to the adjacent portion of the second thread turn (22).

5. The wood or plastic screw according to any of the preceding claims, as far as dependent on claim 2, **characterized in that** the shaving portion (28) intersects the first thread turn (20) and preferably forms an intersection of the thread turns (20, 22).

6. The wood or plastic screw according to any of the preceding claims, **characterized in that** the end portion (30) ends at a point of intersection with the first thread turn (20).

7. The wood or plastic screw according to any of the preceding claims, **characterized in that** the height of the second thread turn (22) is reduced directly before the end portion (30).

8. The wood or plastic screw according to any of the preceding claims, **characterized in that** the end portion (30) ends at least 1.5 mm before the tip (26).

9. The wood or plastic screw according to any of the preceding claims, **characterized in that** the second thread turn (22) does not intersect the first thread turn (20) in the shaving portion (28).

10. The wood or plastic screw according to any of claims 1 - 8, **characterized in that** the second thread turn (22) intersects the first thread turn in the shaving portion (28) exactly once.

11. The wood or plastic screw according to any of the preceding claims, **characterized in that** the second thread turn (22) has a reduced thread height in the shaving portion (28).

## Revendications

1. Vis à bois ou pour plastique, comportant une tête (12), une pointe (26), une tige cylindrique (14) qui présente au moins un filetage à deux filets lesquels comprennent une première et une deuxième spire (20, 22), ainsi qu'un tronçon de pointe (24) conique qui forme la transition de la tige (14) vers la pointe (26), la première spire (20) s'étendant jusqu'à la pointe (26), **caractérisée en ce que** la deuxième spire (22) se termine avant la pointe (26), la deuxième spire (22) présentant dans le tronçon de pointe (24) un tronçon d'extrémité (30) coudé qui s'étend axialement en ligne droite ou présente un pas de vis supérieur à celui du tronçon de la deuxième spire (22) adjacent à celui-ci, et qui coupe la première spire (22).

2. Vis à bois ou pour plastique selon la revendication 1, **caractérisée en ce que** dans la zone de la tige (14) et à l'extérieur du tronçon de pointe (24), la deuxième spire (22) forme un tronçon de raclage (28) par une zone présentant un pas de vis supérieur par rapport à ses zones adjacentes, le tronçon de raclage (28) se fondant vers la tête et la pointe dans des tronçons de la deuxième spire (22) qui s'étendent parallèlement à la première spire (20) qui présente un pas de vis régulier.

3. Vis à bois ou pour plastique selon la revendication 1 ou 2, **caractérisée en ce que** le tronçon d'extrémité (30) et/ou le tronçon de raclage (28) s'étend en ligne droite et de manière axiale vers la pointe (26).

4. Vis à bois ou pour plastique selon l'une des revendications 1 à 3, **caractérisée en ce que** le tronçon d'extrémité (30) et/ou le tronçon de raclage (28) s'étend en sens inverse vers le tronçon adjacent de la deuxième spire (22).

5. Vis à bois ou pour plastique selon l'une des revendications précédentes, lorsqu'elle dépend de la revendication 2, **caractérisée en ce que** le tronçon de raclage (28) coupe la première spire (20) et forme de préférence un croisement des spires (20, 22).

6. Vis à bois ou pour plastique selon l'une des revendications précédentes, **caractérisée en ce que** le tronçon d'extrémité (30) se termine à un point d'intersection avec la première spire (20).

7. Vis à bois ou pour plastique selon l'une des revendications précédentes, **caractérisée en ce que** la hauteur de la deuxième spire (22) est réduite directement avant le tronçon d'extrémité (30).

8. Vis à bois ou pour plastique selon l'une des revendications précédentes, **caractérisée en ce que** le tronçon d'extrémité (30) se termine à au moins 1,5 mm avant la pointe (26).

9. Vis à bois ou pour plastique selon l'une des revendications précédentes, **caractérisée en ce que** la deuxième spire (22) ne coupe pas la première spire (20) dans le tronçon de raclage (28).

10. Vis à bois ou pour plastique selon l'une des revendications 1 à 8, **caractérisée en ce que** la deuxième spire (22) coupe la première spire exactement une fois dans le tronçon de raclage (28).

11. Vis à bois ou pour plastique selon l'une des revendications précédentes, **caractérisée en ce que** la deuxième spire (22) présente une hauteur de filetage réduite dans le tronçon de raclage (28).
